(19) **Europäisches Patentamt / European Patent Office / Office européen des brevets**

(11) **EP 1 855 130 B1**

(12) **FASCICULE DE BREVET EUROPEEN**

(45) Date de publication et mention
de la délivrance du brevet:
**18.05.2011 Bulletin 2011/20**

(51) Int Cl.:
*G02B 6/02* *(2006.01)* *G02B 6/036* *(2006.01)*

(21) Numéro de dépôt: **07011293.3**

(22) Date de dépôt: **03.10.2003**

(54) **Fibre optique a compensation de dispersion chromatique.**

Lichtleitfaser mit Kompensation der chromatischen Dispersion

Optical fibre with chromatic dispersion compensation.

(84) Etats contractants désignés:
**AT BE BG CH CY CZ DE DK EE ES FI FR GB GR HU IE IT LI LU MC NL PT RO SE SI SK TR**

(30) Priorité: **07.10.2002 FR 0212403**

(43) Date de publication de la demande:
**14.11.2007 Bulletin 2007/46**

(62) Numéro(s) de document de la (des) demande(s)
initiale(s) en application de l'article 76 CBE:
**03807865.5 / 1 549 978**

(73) Titulaire: **Draka Comteq B.V.**
**1083 HJ Amsterdam (NL)**

(72) Inventeurs:
• **Beaumont, Florent**
**13009 Marseille (FR)**
• **Sillard, Pierre**
**78150 Le Chesnay (FR)**
• **Nouchi, Pascale**
**92410 Ville D'Avray (FR)**
• **De Montmorillon, Louis-Anne**
**7800 Versailles (FR)**
• **Gorlier, Maxime**
**75008 Paris (FR)**
• **Fleury, Ludovic**
**78730 Saint Amault en Yvelines (FR)**

(74) Mandataire: **op den Brouw-Sprakel, Vera Stefanie Irene et al**
**Algemeen Octrooi- en Merkenbureau**
**P.O. Box 645**
**5600 AP Eindhoven (NL)**

(56) Documents cités:
**EP-A- 0 984 309    EP-A- 1 111 414**
**WO-A-01/73486    WO-A-02/19576**
**WO-A1-99/42869    US-B1- 6 349 163**

• **PATENT ABSTRACTS OF JAPAN vol. 2002, no. 07, 3 juillet 2002 (2002-07-03) -& JP 2002 082251 A (SUMITOMO ELECTRIC IND LTD), 22 mars 2002 (2002-03-22)**

## Description

L'invention concerne le domaine des fibres optiques pour réseau de transmission à multiplexage en longueur d'onde.

L'augmentation des débits d'information sur ce type de réseau impose une compensation de la dispersion chromatique et de la pente de dispersion sur une bande spectrale de plus en plus large. La bande dite S correspond à une bande spectrale allant approximativement de 1460nm à 1530nm. La bande dite C correspond à une bande spectrale allant approximativement de 1530nm à 1565nm. La bande dite L correspond à une bande spectrale allant approximativement de 1565nm à 1625nm. La bande dite U correspond à une bande spectrale allant approximativement de 1625nm à 1675nm. La bande spectrale la plus couramment utilisée est la bande C. De plus en plus, apparaît une tendance à vouloir, en plus de la bande C, utiliser les bandes S et L, voire même la bande U.

Dans l'art antérieur, il est connu d'associer certains types de fibres optiques à dispersion décalée réduisant les effets non-linéaires croisés (« non-zero dispersion shifted fiber » en terminologie anglo-saxonne correspondant à l'abréviation NZ-DSF) à des fibres de compensation de dispersion (« dispersion compensating fiber » en terminologie anglo-saxonne correspondant à l'abréviation DCF), ce qui permet d'obtenir une ligne de transmission dont la dispersion est nulle sur une large plage spectrale.

Selon un premier art antérieur par exemple décrit dans la demande de brevet WO 01/01179, il est connu d'utiliser une fibre optique à compensation de dispersion chromatique présentant une faible pente, mais le rapport dispersion chromatique sur pente de dispersion chromatique pour cette fibre optique est trop faible et ne permet pas de compenser efficacement des fibres de ligne de type NZDSF à pente de dispersion chromatique faible.

Selon un deuxième art antérieur présenté à la conférence OECC/IOOC'01 dans un rapport intitulé « dispersion flattened fiber with high negative dispersion », des simulations numériques présentent une fibre optique à compensation de dispersion chromatique dont le rapport dispersion chromatique sur pente de dispersion chromatique est très élevé, mais les simulations, présentées oralement à cette même conférence, ne les confirment pas et présentent au contraire des valeurs usuelles dont un diamètre de mode de l'ordre de 4μm..

Le document WO 9942869 décrit une fibre optique à compensation de dispersion chromatique sur plusieurs bandes spectrales dont au moins la bande C pour réseau de transmission à multiplexage en longueur d'onde.

L'invention propose une fibre optique à compensation de dispersion chromatique qui, ayant un rapport dispersion chromatique sur pente de dispersion chromatique suffisamment élevé, et avantageusement une pente de dispersion chromatique faible, peut compenser une fibre optique de ligne de type NZ-DSF à faible pente de dispersion chromatique. La fibre optique à compensation de dispersion chromatique selon l'invention possède également un diamètre de mode assez élevé, ce qui lui permet d'être utilisable dans des lignes de transmission optique à très hauts débits, par exemple supérieur à 40 Gigabits par seconde. Le compromis réalisé par la fibre optique à compensation de dispersion chromatique selon l'invention permet une compensation efficace sur une très large plage spectrale pouvant aller jusqu'à englober les bandes S, C, L et U. L'invention est définie dans la revendication 1.

Selon l'invention, il est prévu une fibre optique à compensation de dispersion chromatique sur plusieurs bandes spectrales dont au moins la bande C, pour réseau de transmission à multiplexage en longueur d'onde, comportent successivement du centre vers la périphérie un coeur présentant un profil d'indice variable puis une gaine d'indice constant, le profil d'indice variable du coeur comportant successivement, du centre vers la périphérie, une tranche centrale en forme de rectangle ou en forme de trapèze d'indice maximum supérieur à l'indice de la gaine, la différence ($\Delta n_1$) entre l'indice maximum de la tranche centrale et l'indice de la gaine étant comprise entre $14,0.10^{-3}$ et $20,0.10^{-3}$, une tranche enterrée d'indice minimum inférieur à l'indice de la gaine, une tranche annulaire d'indice maximum supérieur à l'indice de la gaine et inférieur à l'indice maximum de la tranche centrale, la valeur du double de l'intégrale

$$\left(S_2 = 2.\int_{r_1}^{r_2} \Delta n(r).r.dr\right),$$

entre le rayon ($r_1$) de la partie de la tranche centrale présentant un indice supérieur à l'indice de la gaine et le rayon ($r_2$) de la partie de la tranche enterrée présentant un indice inférieur à l'indice de la gaine, du produit du rayon par la différence d'indice par rapport à la gaine étant entre $-150.10^{-3}$ et $-10.10^{-3}$ les rayons et les indices de chacune des tranches étant déterminés de manière à ce que la fibre optique à compensation de dispersion présente, d'une part à la longueur d'onde de 1550nm, premièrement une dispersion chromatique comprise entre -40 ps/nm.km et -15 ps/nm.km, deuxièmement une pente de dispersion chromatique qui est négative, troisièmement un rapport dispersion chromatique sur pente de dispersion chromatique dont la voleur absolue est supérieure à 750nm, quatrièmement un diamètre de mode supérieur à 5μm, et d'autre part à la longueur d'onde de 1625nm, des pertes par courbure pour un rayon de 10mm qui sont inférieures à 400dB/m.

De préférence, les rayons et les indices de chacune des tranches sont déterminés de manière à ce que la fibre optique à compensation de dispersion présente, à la longueur d'onde de 1550nm, un rapport dispersion chromatique sur pente de dispersion chromatique dont la valeur absolue est supérieure à 1500nm.

De préférence, la fibre optique à compensation de dispersion chromatique selon l'invention compense la dispersion chromatique d'une fibre optique de ligne sur les bandes spectrales S, C, L et U.

De préférence, les rayons et les indices de chacune des tranches de la fibre optique à compensation de dispersion selon l'invention sont déterminés de manière à ce que ladite fibre optique à compensation de dispersion présente, à la longueur d'onde de 1550nm, une pente de dispersion chromatique dont la valeur absolue est inférieure à $0,02ps/nm^2.km$.

De préférence, les rayons et les indices de chacune des tranches tronches de la fibre optique à compensation de dispersion selon l'invention sont déterminés de manière à ce que ladite fibre optique à compensation de dispersion présente, à la longueur d'onde de 1550nm, une surface effective supérieure à $20\mu m^2$.

La fibre optique à compensation de dispersion selon l'invention est associée à une fibre optique de ligne dons un système de transmission à fibre optique. Dons une forme de réalisation, le système de transmission à fibre optique comprend l'association d'une fibre optique de ligne et d'une fibre optique à compensation de dispersion selon l'invention en ligne. Dans une autre forme de réalisation, le système de transmission à fibre optique comprend l'association d'une fibre optique de ligne et d'une fibre optique à compensation de dispersion selon l'invention en module.

Dans un premier mode de réalisation préférentiel de l'invention, la fibre optique à compensation de dispersion chromatique selon l'invention comprend un premier type de profil d'indice variable du coeur à trois tranches. Le premier type de profil d'indice variable du coeur est successivement constitué, du centre vers la périphérie, d'une tranche centrale d'indice maximum supérieur à l'indice de la gaine, d'une tranche enterrée d'indice minimum inférieur à l'indice de la gaine, d'une tranche annulaire d'indice maximum supérieur à l'indice de la gaine et inférieur à l'indice maximum de la tranche centrale. La tranche centrale est en forme de trapèze ou de rectangle. Les autres tranches sont de préférence en forme de rectangle, mais elles peuvent aussi être par exemple en forme de trapèze ou de triangle ou en alpha.

Afin d'augmenter l'étendue de la plage spectrale pour laquelle la dispersion chromatique de la fibre optique de ligne est compensée le plus efficacement possible par la fibre optique à compensation de dispersion chromatique selon l'invention ainsi que les autres propriétés de la fibre optique à compensation de dispersion chromatique selon l'invention, un certain nombre des plages ou de relations préférentielles notamment pour les indices et les rayons du deuxième type de profil d'indice du coeur vont maintenant être données.

La différence ($\Delta n_2$) entre l'indice minimum de la tranche enterrée et l'indice de la gaine est comprise entre $-3,0.10^{-3}$ et $0,0.10^{-3}$ et le rayon extérieur ($r_2$) de la tranche enterrée est compris entre $5,8\mu m$ et $8,5\mu m$.

La différence ($\Delta n_3$) entre l'indice maximum de la tronche annulaire et l'indice de la gaine est comprise entre $1,0.10^{-3}$ et $6,0.10^{-3}$ et le rayon extérieur ($r_3$) de la tranche annulaire est compris entre $7,2\mu m$ et $9,7\mu m$.

De préférence, la valeur du double de l'intégrale

$$\left( S_1 = 2.\int_0^{r1} \Delta n(r).r.dr \right),$$ entre un rayon nul et le rayon

($r_1$) de la partie de la tranche centrale présentant un indice supérieur à l'indice de la gaine, du produit du rayon par la différence d'indice par rapport à la gaine, est comprise entre $39.10^{-3}$ et $65.10^{-3}$ $\mu m^2$.

De préférence, la valeur du double de l'intégrale

$$\left( S_3 = 2.\int_{r2}^{r3} \Delta n(r).r.dr \right),$$ entre le rayon ($r_2$) de la partie de la tranche enterrée présentant un indice inférieur à l'indice de la gaine et le rayon ($r_3$) de la partie de la tranche annulaire présentant un indice supérieur à l'indice de la gaine, du produit du rayon par la différence d'indice par rapport à la gaine, est comprise entre $30.10^{-3}$ et $140.10^{-3}$ $\mu m^2$.

De préférence, la voleur du triple de l'intégrale

$$\left( S_{11} = 3.\int_0^{r1} \Delta n(r).r^2.dr \right),$$ entre un rayon nul et le

rayon ($r_1$) de la partie de la tranche centrale présentant un indice supérieur à l'indice de la gaine, du produit du carré du rayon par la différence d'indice par rapport à l'indice de la gaine, est comprise entre $59.10^{-3}$ $\mu m^3$ et $123.10^{-3}$ $\mu m^3$.

Lorsque la tranche centrale est en forme de rectangle, la différence ($\Delta n_1$) entre l'indice maximum de la tranche centrale et l'indice de la gaine est préférentiellement comprise entre $14,0.10^{-3}$ et $20,0.10^{-3}$ et le rayon ($r_1$) de la partie de la tranche centrale présentant un indice supérieur à l'indice de la gaine est préférentiellement compris entre $1,4\mu m$ et $1,9\mu m$.

Lorsque la tranche centrale est en forme de trapèze, la différence ($\Delta n_1$) entre l'indice maximum de la tranche centrale et l'indice de la gaine est préférentiellement comprise entre $14,0.10^{-3}$ et $20,0.10^{-3}$, le rayon ($r_1$) de la partie de la tranche centrale présentant un indice supérieur à l'indice de la gaine est préférentiellement compris entre $1,4\mu m$ et $1,9\mu m$ et le rayon ($r_{1a}$) de la partie de la tranche centrale présentant l'indice maximum de la tranche centrale est préférentiellement compris entre $1,3\mu m$ et $1,9\mu m$.

De préférence, pour toutes les fibres optiques à compensation de dispersion chromatique selon l'invention correspondant au premier mode de réalisation, les rayons et les indices de chacune des tranches sont déterminés de manière à ce que la fibre optique à compensation de dispersion présente une longueur d'onde de coupure théorique supérieure à 1600nm.

Dans un deuxième mode de réalisation préférentiel de l'invention, la fibre optique à compensation de dispersion chromatique selon l'invention comprend un deuxième type de profil d'indice variable du coeur à quatre tranches. Le deuxième type de profil d'indice variable du coeur est successivement constitué, du centre vers la périphérie, d'une tranche centrale d'indice maximum supérieur à l'indice de la gaine, d'une première tranche enterrée d'indice minimum inférieur à l'indice de la gaine, d'une tranche annulaire d'indice maximum supérieur à l'indice de la gaine et inférieur à l'indice maximum de la tranche centrale, d'une deuxième tranche enterrée d'indice minimum inférieur à l'indice de la gaine. La tranche centrale est en forme de rectangle ou en forme de trapèze. Les autres tranches sont de préférence en forme de rectangle, mais elles peuvent aussi être par exemple en forme de trapèze ou de triangle ou en alpha.

Dans un troisième mode de réalisation, la fibre optique à compensation de dispersion chromatique selon l'invention comprend un troisième type de profil d'indice variable du coeur qui est successivement constitué, du centre vers la périphérie, d'une tranche centrale d'indice maximum supérieur à l'indice de la gaine, d'une tronche enterrée d'indice minimum inférieur à l'indice de la gaine, d'une première tranche annulaire d'indice maximum supérieur à l'indice de la gaine et inférieur à l'indice maximum de la tranche centrale, d'une deuxième tranche annulaire d'indice maximum supérieur à l'indice de la gaine et supérieur à l'indice de la première tranche annulaire. La tranche centrale est en forme de rectangle, ou en forme de trapèze . Les autres tranches sont de préférence en forme de rectangle, mais elles peuvent aussi être par exemple en forme de trapèze ou de triangle ou en alpha.

Dons un quatrième mode de réalisation, la fibre optique à compensation de dispersion chromatique selon l'invention comprend un quatrième type de profil d'indice variable du coeur qui est successivement constitué, du centre vers la périphérie, d'une tranche centrale d'indice maximum supérieur à l'indice de la gaine, d'une première tronche enterrée d'indice minimum inférieur à l'indice de la goine, d'une deuxième tranche enterrée d'indice minimum inférieur à l'indice de la gaine et supérieur à l'indice de la première tranche enterrée, d'une tranche annulaire d'indice maximum supérieur à l'indice de la gaine et inférieur à l'indice maximum de la tranche centrale. La tronche centrale est en forme de rectangle ou en forme de trapèze . Les autres tronches sont de préférence en forme de rectangle, mais elles peuvent aussi être par exemple en forme de trapèze ou de triangle ou en alpha

De préférence, pour toutes les fibres optiques à compensation de dispersion chromatique selon l'invention correspondant aux deuxième, troisième et quatrième modes de réalisation, les rayons et les indices de chacune des tranches sont déterminés de manière à ce que la fibre optique à compensation de dispersion présente une longueur d'onde de coupure théorique supérieure à 1550nm.

L'invention sera mieux comprise et d'autres particularités et avantages apparaîtront à l'aide de la description ci-après et des dessins joints, donnés à titre d'exemples, où : .

- la figure 1 représente schématiquement un exemple de premier type de profil à trois tranches d'une fibre optique à compensation de dispersion chromatique selon l'invention;

- la figure 2 représente un tableau comprenant les valeurs de rayons et de différences d'indice pour une dizaine d'exemples de profils de cet exemple de premier type de fibre optique à compensation de dispersion chromatique selon l'invention ;

- la figure 3 représente un tableau comprenant certaines propriétés des profils de fibre optique à compensation de dispersion chromatique selon l'invention définis à la figure 2 ;

- la figure 4 représente un tableau comprenant d'autres propriétés des profils de fibre optique à compensation de dispersion chromatique selon l'invention définis à la figure 2 ;

- la figure 5 représente un tableau comprenant d'autres propriétés des profils de fibre optique à compensation de dispersion chromatique selon l'invention définis à la figure 2 ;

- la figure 6 représente un tableau comprenant d'autres propriétés des profils de fibre optique à compensation de dispersion chromatique selon l'invention définis à la figure 2 ;

- la figure 7 représente schématiquement un autre exemple de premier type de profil à trois tranches d'une fibre optique à compensation de dispersion chromatique selon l'invention ;

- la figure 8 représente un tableau comprenant les valeurs de rayons et de différences d'indice pour une dizaine d'exemples de profils de cet autre exemple de premier type de fibre optique à compensation de dispersion chromatique selon l'invention ;

- la figure 9 représente un tableau comprenant certaines propriétés des profils de fibre optique à compensation de dispersion chromatique selon l'invention définis à la figure 8 ;

- la figure 10 représente un tableau comprenant d'autres propriétés des profils de fibre optique à compensation de dispersion chromatique selon l'invention définis à la figure 8 ;

- la figure 11 représente un tableau comprenant d'autres propriétés des profils de fibre optique à compensation de dispersion chromatique selon l'invention définis à la figure 8 ;

- la figure 12 représente un tableau comprenant d'autres propriétés des profils de fibre optique à compensation de dispersion chromatique selon l'invention définis à la figure 8 ;

- la figure 13 représente schématiquement des deuxième, troisième et quatrième types de profil à quatre tronches d'une fibre optique à compensation de dispersion chromatique selon l'invention ;

- la figure 14 représente un tableau comprenant les voleurs de rayons et de différences d'indice pour une dizaine d'exemples des deuxième, troisième et quatrième types de profil de fibre optique à compensation de dispersion chromatique selon l'invention ;
- la figure 15 représente un tableau comprenant certaines propriétés des profils de fibre optique à compensation de dispersion chromatique selon l'invention définis à la figure 14 ;
- la figure 16 représente un tableau comprenant d'autres propriétés des profils de fibre optique à compensation de dispersion chromatique selon l'invention définis à la figure 14 ;
- la figure 17 représente un tableau comprenant d'autres propriétés des profils de fibre optique à compensation de dispersion chromatique selon l'invention définis à la figure 14 ;
- la figure 18 représente un tableau comprenant d'autres propriétés des profils de fibre optique à compensation de dispersion chromatique selon l'invention définis à la figure 14 ;
- la figure 19 représente la variaton de la dispersion chromatique dans les bandes S, C, L et U, des exemples de profil n°8a, n°8b et n°2c.

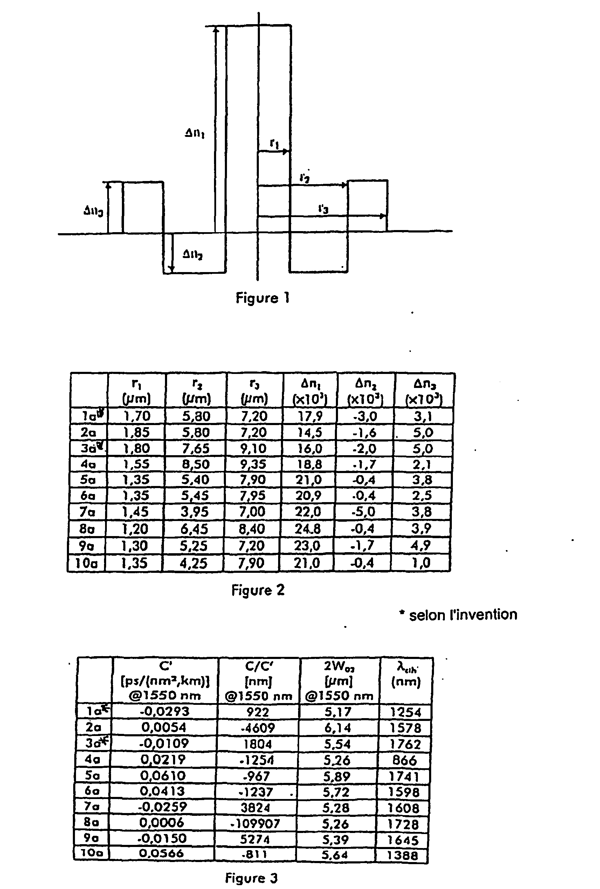

La figure 1 représente schématiquement un exemple de premier type de profil à trois tranches d'une fibre optique à compensation de dispersion chromatique selon l'invention. La première tranche appelée tronche centrale présente une différence maximale d'indice $\Delta n1$ avec l'indice constant de la gaine et un rayon extérieur r1. La différence d'indice maximale $\Delta n1$ est positive. De préférence, entre un rayon nul et le rayon r1, l'indice est constant et maximum. La deuxième tranche appelée tranche enterrée présente une différence maximale d'indice $\Delta n2$ avec l'indice constant de la gaine et un rayon extérieur r2. La différence d'indice maximale $\Delta n2$ est négative. De préférence, entre le rayon r1 et le rayon r2, l'indice est constant. La troisième tronche appelée tranche annulaire présente une différence maximale d'indice $\Delta n3$ avec l'indice constant de la gaine et un rayon extérieur r3. La différence d'indice maximale $\Delta n3$ est positive. De préférence, entre le rayon r2 et le rayon r3, l'indice est constant. Au-delà du rayon r3 se trouve la gaine d'indice constant.

La figure 2 représente un tableau comprenant les valeurs de rayons et de différences d'indice pour une dizaine d'exemples de profils de cet exemple de premier type de fibre optique à compensation de dispersion chromatique selon l'invention. La colonne de gauche comprend la dénomination des exemples du n°1a ou n°10a. Les fibres 2a, 4a, 5a, 6a, 7a, 8a, 9a et 10a sont exemples comperatifs. Les trois colonnes suivantes expriment en $\mu$m des rayons du profil d'indice variable de coeur. Les trois dernières colonnes expriment mille fois des différences d'indice (sans unité).

La figure 3 représente un tableau comprenant certaines propriétés des profils de fibre optique à compensation de dispersion chromatique selon l'invention définis à la figure 2. La colonne de gauche comprend la dénomination des exemples du n°1a au n°10a. Les fibres 2a, 4a, 5a, 6a, 7a, 8a, 9a et 10a sont exemples comperatifs. Pour chaque exemple considéré, les outres colonnes représentent des propriétés de la fibre optique correspondant à l'exemple considéré. La colonne suivante représente la pente de dispersion chromatique C' exprimée en $ps/nm^2.km$ à une longueur d'onde valant 1550nm. La colonne suivante représente le rapport dispersion chromatique C sur pente de dispersion chromatique C' exprimée en nm à une longueur d'onde valant 1550nm. La colonne suivante représente le diamètre de mode $2W_{02}$, à la longueur d'onde de 1550nm, exprimé en $\mu$m. La dernière colonne représente la longueur de coupure théorique $\lambda_{clh}$ exprimée en nm.

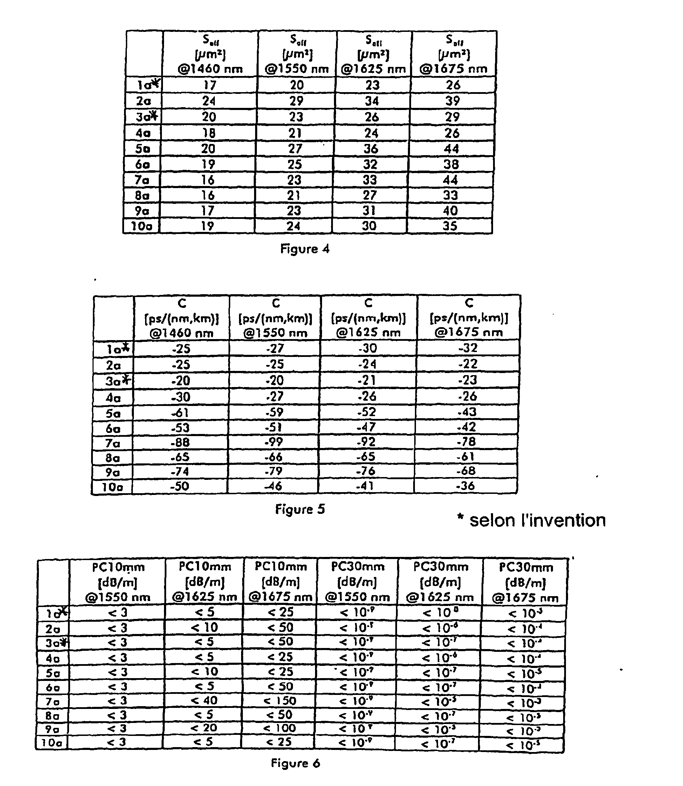

La figure 4 représente un tableau comprenant d'autres propriétés des profils de fibre optique à compensation de dispersion chromatique selon l'invention définis à la figure 2. La colonne de gauche comprend la dénomination des exemples déjà expliquée ci-dessus. Pour chaque exemple considéré, les autres colonnes représentent des propriétés de la fibre optique correspondant à l'exemple considéré. Les quatre colonnes suivantes représentent des surfaces effectives $S_{cll}$ exprimées en $\mu$m² respectivement aux longueurs d'onde de 1460nm, 1550nm, 1625nm et 1675nm.

La figure 5 représente un tableau comprenant d'autres propriétés des profils de fibre optique à compensation de dispersion chromatique selon l'invention définis à la figure 2. La colonne de gauche comprend la dénomination des exemples déjà expliquée ci-dessus. Pour chaque exemple considéré, les autres colonnes représentent des propriétés de la fibre optique correspondant à l'exemple considéré. Les quatre colonnes suivantes représentent des dispersions chromatiques C exprimées en ps/nm.km respectivement aux longueurs d'onde de 1460nm, 1550nm, 1625nm et 1675nm.

La figure 6 représente un tableau comprenant d'autres propriétés des profils de fibre optique à compensation de dispersion chromatique selon l'invention définis à la figure 2. La colonne de gauche comprend la dénomination des exemples déjà expliquée ci-dessus. Pour chaque exemple considéré, les autres colonnes représentent des propriétés de la fibre optique correspondant à l'exemple considéré. Les trois colonnes suivantes représentent des seuils maximum de pertes par courbure exprimées en dB/m pour un rayon de 10mm respectivement aux longueurs d'onde de 1550nm, 1625nm et 1675nm. Par exemple, pour l'exemple la, lesdites pertes par courbure sont inférieures à 3dB/m. Les trois colonnes suivantes représentent des seuils maximum de pertes par courbure exprimées en dB/m pour un rayon de 30mm respectivement aux longueurs d'onde de 1550nm, 1625nm et 1675nm.

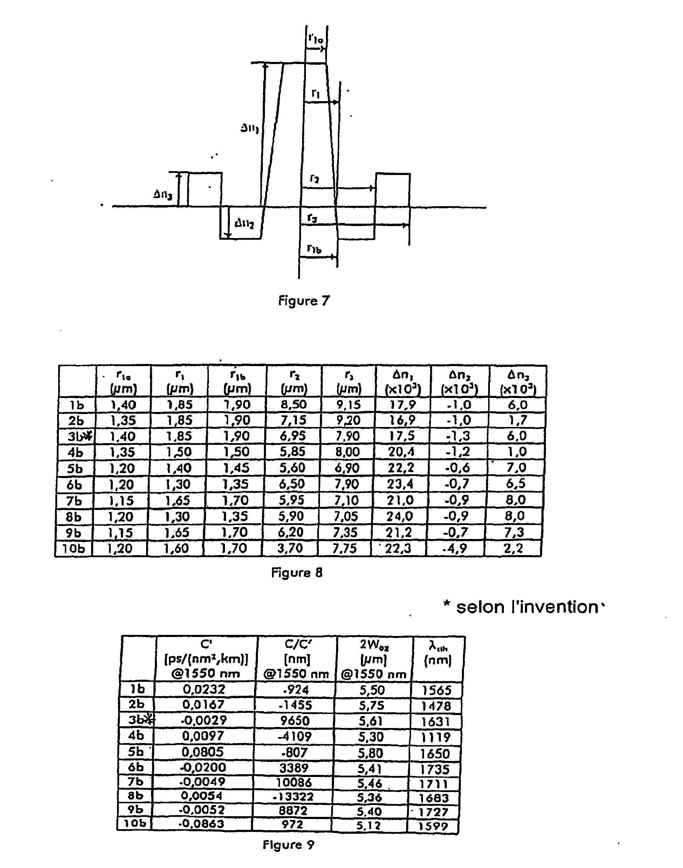

La figure 7 représente schématiquement un autre exemple de premier type de profil à trois tranches d'une fibre optique à compensation de dispersion chromatique selon l'invention. La première tranche appelée tranche centrale présente une différence maximale d'indice Δn1 avec l'indice constant de la gaine et un rayon extérieur r1b. La différence d'indice maximale Δn1 est positive. De préférence, entre un rayon nul et le rayon r1a, l'indice est constant et maximum, il devient égal à celui de la gaine pour une valeur r1 du rayon et atteint celui de la deuxième tranche pour une voleur r1b. La deuxième tranche appelée tranche enterrée présente une différence maximale d'indice Δn2 avec l'indice constant de la gaine et un rayon extérieur r2. La différence d'indice maximale Δn2 est négative. De préférence, entre le rayon r1b et le rayon r2, l'indice est constant. La troisième tranche appelée tranche annulaire présente une différence maximale d'indice Δn3 avec l'indice constant de la gaine et un rayon extérieur r3. La différence d'indice maximale Δn3 est positive. De préférence, entre le rayon r2 et le rayon r3, l'indice est constant. Au-delà du rayon r3 se trouve la gaine d'indice constant.

La figure 8 représente un tableau comprenant les valeurs de rayons et de différences d'indice pour une dizaine d'exemples de profils de cet autre exemple de premier type de fibre optique à compensation de dispersion chromatique selon l'invention. La colonne de gauche comprend la dénomination des exemples du n°1b au n°10b. Les fibres 1b, 2b, 4b, 5b, 6b, 7b, 8b, 9b, 10b sont exemples comperatifs. Les cinq colonnes suivantes expriment en μm des rayons du profil d'indice variable de coeur. Les trois dernières colonnes expriment mille fois des différences d'indice (sans unité).

La figure 9 représente un tableau comprenant certaines propriétés des profils de fibre optique à compensation de dispersion chromatique selon l'invention définis à la figure 8. Sa description est analogue à celle de la figure 3.

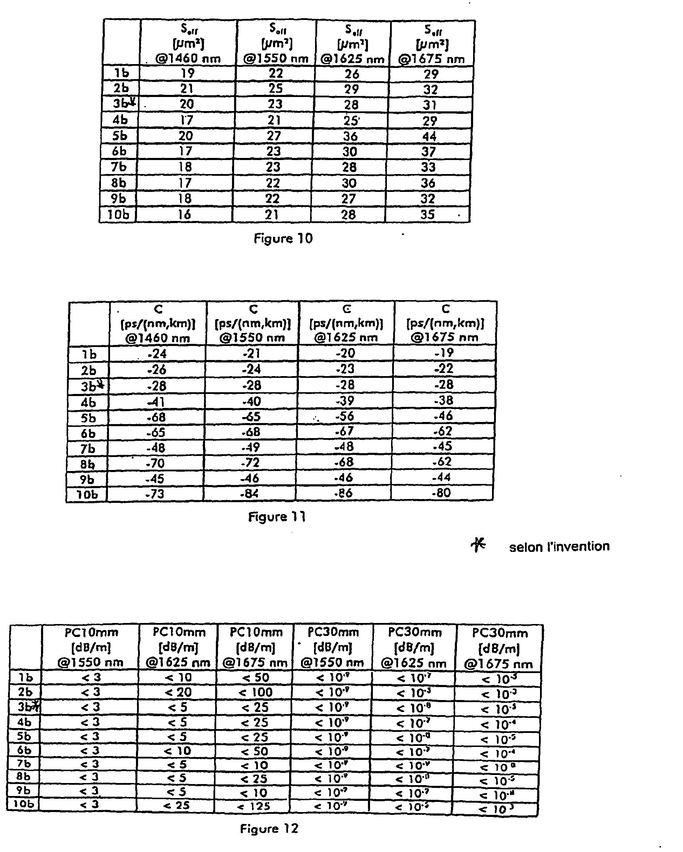

La figure 10 représente un tableau comprenant d'autres propriétés des profils de fibre optique à compensation de dispersion chromatique selon l'invention définis à la figure 8. Sa description est analogue à celle de la figure 4.

la figure 11 représente un tableau comprenant d'autres propriétés des profils de fibre optique à compensation de dispersion chromatique selon l'invention définis à la figure 8. Sa description est analogue à celle de la figure 5.

La figure 12 représente un tableau comprenant d'autres propriétés des profils de fibre optique à compensation de dispersion chromatique selon l'invention définis à la figure 8. Sa description est analogue à la figure 6.

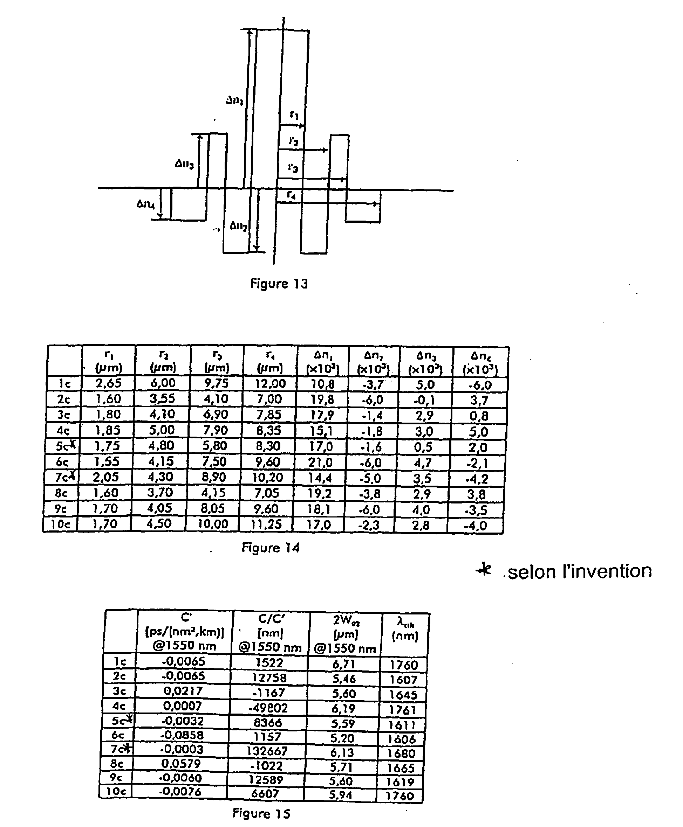

La figure 13 représente schématiquement des deuxième, troisième et quatrième types de profil à quatre tranches d'une fibre optique à compensation de dispersion chromatique selon l'invention. La première tranche appelée tranche centrale présente une différence maximale d'indice Δn1 avec l'indice constant de la gaine et un rayon extérieur r1. La différence d'indice maximale Δn1 est positive. De préférence, entre un rayon nul et le rayon r1, l'indice est constant. La deuxième tranche appelée tranche enterrée présente une différence maximale d'indice Δn2 avec l'indice constant de la gaine et un rayon extérieur r2. La différence d'indice maximale Δn2 est négative. De préférence, entre le rayon r1 et le rayon r2, l'indice est constant. Pour les deuxième et troisième types de profil, la troisième tranche appelée tranche annulaire présente une différence maximale d'indice Δn3 avec l'indice constant de la gaine et un rayon extérieur r3. La différence d'indice maximale Δn3 est positive. De préférence, entre le rayon r2 et le rayon r3, l'indice est constant. Pour le quatrième type de profil, la troisième tranche appelée tranche enterrée présente une différence maximale d'indice Δn3 avec l'indice constant de la gaine et un rayon extérieur r3. La différence d'indice maximale Δn3 est négative. De préférence, entre le rayon r2 et le rayon r3, l'indice est constant. Pour le deuxième type de profil, la quatrième tranche appelée tranche enterrée présente une différence maximale d'indice Δn4 avec l'indice constant de la gaine et un rayon extérieur r4. La différence d'indice maximale Δn4 est négative. De préférence, entre le rayon r3 et le rayon r4, l'indice est constant. Au-delà du rayon r4 se trouve la gaine d'indice constant. Pour les troisième et quatrième types de profil, la quatrième tranche appelée tranche annulaire présente une différence maximale d'indice Δn4 avec l'indice constant de la gaine et un rayon extérieur r4. La différence d'indice maximale Δn4 est positive. De préférence, entre le rayon r3 et le rayon r4, l'indice est constant. Au-delà du rayon r4 se trouve la gaine d'indice constant.

La figure 14 représente un tableau comprenant les valeurs de rayons et de différences d'indice pour une dizaine d'exemples des deuxième, troisième et quatrième types de profil de fibre optique à compensation de dispersion chromatique selon l'invention. La colonne de gauche comprend la dénomination des exemples du n°1c ou n°10c. Les fibres 1c, 2c, 3c, 4c, 6c, 8c, 9c, 10c sont exemples comperatifs. Les quatre colonnes suivantes expriment en μm des rayons du profil d'indice variable de coeur. Les quatre dernières colonnes expriment mille fois des différences d'indice (sans unité).

La figure 15 représente un tableau comprenant certaines propriétés des profils de fibre optique à compensation de dispersion chromotique selon l'invention définis à la figure 14. Sa description est analogue à celle de la figure 3.

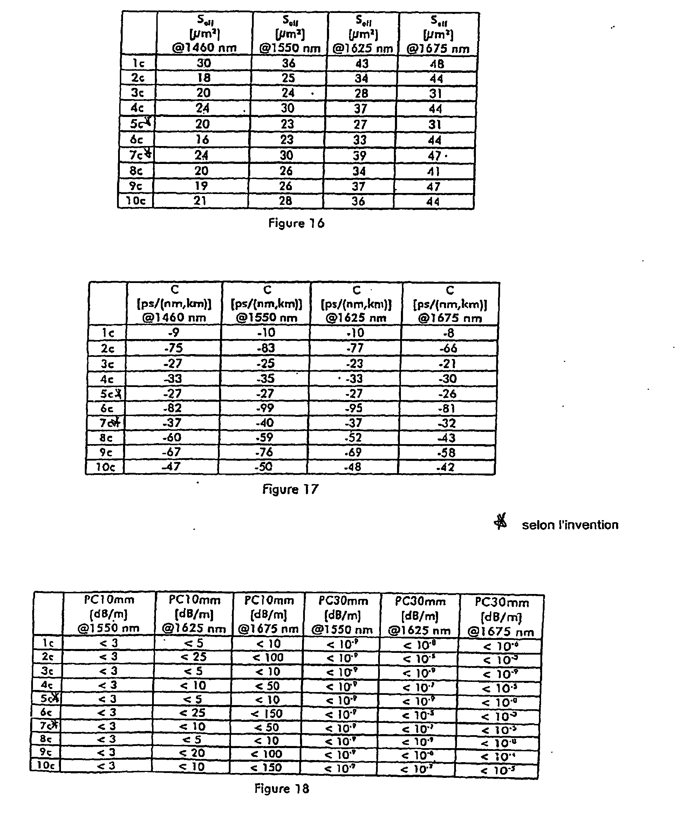

La figure 16 représente un tableau comprenant d'autres propriétés des profils de fibre optique à compensation de dispersion chromatique selon l'invention définis à la figure 14. Sa description est analogue à celle de la figure 4.

La figure 17 représente un tableau comprenant d'autres propriétés des profils de fibre optique à compensation de dispersion chromatique selon l'invention définis à la figure 14. Sa description est analogue à celle de la figure 5.

La figure 18 représente un tableau comprenant d'autres propriétés des profils de fibre optique à compensation de dispersion chromatique selon l'invention définis à la figure 14. Sa description est analogue à la figure 6.

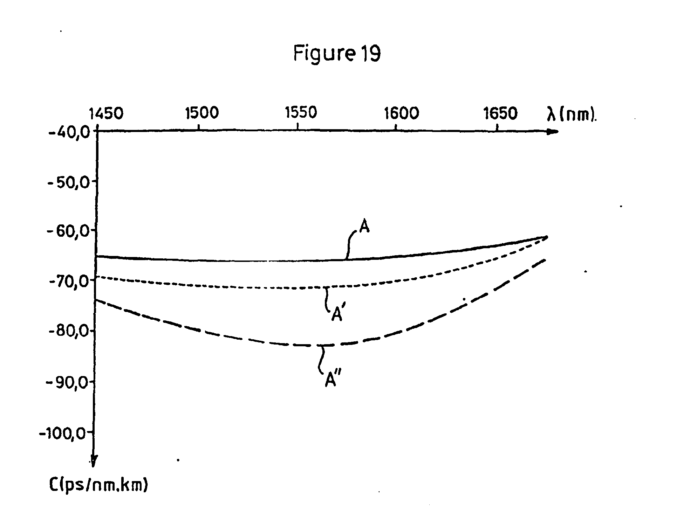

La figure 19 représente la variaton de la dispersion chromatique dans les bandes S, C, L et U, des exemples de profil n°8a, n°8b et n°2c, respectivement par le biais des courbes A, A' et A" dans lesquelles la dispersion chromatique C exprimée en ps/nm.km est située en ordonnée tandis que la longueur d'onde λ exprimée en nm est située en abscisse.

Selon l'invention, dans la fibre optique à compensation de dispersion chromatique selon l'invention, les rayons et les indices de chacune des tranches sont également déterminés de manière à ce que la fibre optique à compensation de dispersion présente aussi, à la longueur d'onde de 1550nm, une dispersion chromatique comprise entre -40ps/nm.km et -15ps/nm.km, une pente de dispersion chromatique qui est négative. Une fibre optique à compensation de dispersion chromatique dont la dispersion chromatique est moyenne en valeur absolue est avantageuse par rapport à une fibre optique à compensation de dispersion chromatique dont la dispersion chromatique est faible en valeur absolue car pour compenser une même fibre optique de ligne, il en faut une longueur moindre ; la fibre optique à compensation de dispersion chromatique ayant une atténuation généralement supérieure à l'atténuation de la fibre optique de ligne, il est avantageux que la ligne de transmission comprenne le moins de fibre optique à compensation de dispersion chromatique possible et le plus de fibre optique de ligne possible. Une fibre optique à compensation de dispersion chromatique dont la pente de dispersion chromatique est négative est avantageuse par rapport à une fibre optique à compensation de dispersion chromatique dont la pente de dispersion chromatique est positive car la pente positive de dispersion chromatique que présente la grande majorité des fibres optiques de ligne peut ainsi également être compensée.

Selon une option préférentielle de l'invention, dans la fibre optique à compensation de dispersion chromatique selon l'invention, les rayons et les indices de chacune des tranches sont également déterminés de manière à ce que la fibre optique à compensation de dispersion présente aussi, à la longueur d'onde de 1550nm, une différence $\Delta n$, entre l'indice maximum de la tranche centrale et l'indice de la gaine qui est comprise entre $14,0.10^{-3}$ et $20,0.10^{-3}$. L'intervalle modéré de voleurs prises par la différence entre l'indice maximum de la tranche centrale et l'indice de la gaine permet l'obtention d'une fibre optique à compensation de dispersion chromatique présentant à la fois une meilleure atténuation et/ou de meilleures pertes par courbure que les fibres optiques dont la différence entre l'indice maximum de la tranche centrale et l'indice de la gaine vaut environ $30.10^{-3}$ ou plus et une dispersion chromatique plus négative que des fibres optiques dont la différence entre l'indice maximum de la tranche centrale et l'indice de la gaine vaut environ $12.10^{-3}$ ou moins.

L'invention concerne des fibres optiques destinées à être en ligne.

**Revendications**

1. Fibre optique à compensation de dispersion chromatique sur plusieurs bondes spectrales dont ou moins la bonde C,

pour réseau de transmission à multiplexage en longueur d'onde,

comportant successivement du centre vers la périphérie un coeur présentant un profil d'indice variable puis une gaine indice constant,

le profil d'indice variable du coeur comportant successivement, du centre vers la périphérie,

une tranche centrale en forme de rectangle ou en forme de trapèze d'indice maximum supérieur à l'indice de la gaine,

une tranche antenne d'indice minimum inférieur à l'indice de la gaine,

une tranche annulaire d'indice maximum supérieur à l'indice de la gaine et inférieur à l'indice maximum de la tranche centrale, la différence ($\Delta n_1$) entre l'indice maximum de la tranche centrale et l'indice de la gaine étant comprise entre $14,0.10^{-3}$ et $20,0.10^{-3}$, la différence ($\Delta n_7$) entre l'indice minimum de la tranche enterrée et l'indice de la gaine est comprise entre $-3,0.10^{-3}$ et $0,0.10^{-3}$,

el en ce que le rayon extérieur ($r_2$) de la tranche enterrée est compris entre $5,8\mu m$ et $8,5\mu m$, la différence ($\Delta n_3$) entre l'indice maximum de la tranche annulaire et l'indice de la gaine est comprise entre $1,0.10^{-3}$ et $6,0.10^{-3}$,

et en ce que le rayon extérieur ($r_3$) de la tranche annulaire est compris entre $7,2\mu m$ et $9,7\mu m$, et le rayon ($r_1$) de la partie de la tranche centrale en forme de rectangle ou en forme de trapèze présentant un indice supérieur à l'indice de la gaine est compris entre $1,4\ \mu m$ et $1,9\ \mu m$,

d'une part à la longueur d'onde de 1550nm,

premièrement une dispersion chromatique inférieure comprise entre -40 ps/nm.km et -15 ps/nm.km,,

deuxièmement une pente de dispersion chromatique qui est négative, troisièmement un rapport dispersion chromatique sur pente de dispersion chromatique dont le valeur absolue est supérieure à 750nm,

quatrièmement un diamètre de mode supérieur à $5\mu m$,

et d'autre port à la longueur d'onde de 1625nm, des pertes par courbure pour un rayon de 10mm qui sont inférieures à 400d8/m,

2. Fibre optique compensation de dispersion chromatique selon la revendication 1, **caractérisée en ce**

**que** les rayons et les indices de chacune des tranches sont déterminés de manière à ce que la fibre optique à compensation de dispersion présente, à la longueur d'onde de 1550nm, un rapport dispersion chromatique sur pente de dispersion chromatique dont la voleur absolue est supérieure à 1500nm.

la valeur du double de l'intégrale

$$(S_2 = 2. \int_{r1}^{r2} \Delta n(r).r.dr) \; ,$$

entre le rayon ($r_1$) de la partie de la tranche centrale présentant un indice supérieur à l'indice de la gaine et le rayon ($r_2$) de la partie de la tranche enterrée présentant un indice inférieur à l'indice de la gaine, du produit du rayon par la différence d'indice par rapport à la gaine étant entre $-150.10^{-3}$ et $-10.10^{-3}$.

3. Fibre optique à compensation de dispersion chromatique selon l'une quelconque des revendications précédentes, **caractérisés en ce que** la fibre optique compensation de dispersion chromatique compense la dispersion chromatique d'une fibre optique de ligne sur les bondes spectrales S, C, L et U.

4. Fibre optique à compensation de dispersion chromatique selon l'une quelconque des revendications précédentes, **caractérisée en ce que** la valeur du double de l'intégrale $(S_1 = 2. \int_{0}^{r1} \Delta n(r) r.dr)$, entre un rayon nul et le rayon ($r_1$) de la partie de la tranche centrale présentant un indice supérieur à l'indice de la gaine, du produit du rayon par la différence d'indice par rapport à la gaine, est comprise entre $39.10^{-3}$ et $65.10^{-3}$ $\mu m^2$.

5. Fibre optique à compensation de dispersion chromatique selon l'une quelconque des revendications précédentes, **caractérisée en ce que** la valeur du double de l'intégrale $(S_2 = 2. \int_{r1}^{r2} \Delta n(r) r.dr)$, entre le rayon ($r_1$) de la partie de la tranche centrale présentant un indice supérieur à l'indice de la gaine et le rayon ($r_2$) de la partie de la tranche enterrée présentant un indice inférieur à l'indice de la gaine, du produit du rayon par la différence d'indice par rapport à la gaine, est comprise entre $-150.10^{-3}$ et $-10.10.^{3}$ $\mu m^2$.

6. Fibre optique à compensation de dispersion chromatique selon l'une quelconque des revendications précédentes, **caractérisée en ce que** la valeur du double de l'intégrale $(S_3 = 2. \int_{r2}^{r3} \Delta n(r).r.dr)$, entre le rayon ($r_2$) de la partie de la tranche enterrée présentant un indice inférieur à l'indice de la gaine et le rayon ($r_3$) de la partie de la tranche annulaire présentant un indice supérieur à l'indice de la gaine, du produit du rayon par la différence d'indice par rapport à la gaine, est comprise entre $30.10^{-3}$ et $140.10^{-3}$ $\mu m^2$.

7. Fibre optique à compensation de dispersion chromatique selon l'une quelconque des revendications précédentes , **caractérisée en ce que** la valeur du triple de l'intégrale $(S_{11} = 3. \int_{0}^{r1} \Delta n(r) r^2.dr)$, entre un rayon nul et le rayon ($r_1$) de la partie de la tranche centrale présentant un indice supérieur à l'indice de la gaine, du produit du carré du rayon par la différence d'indice par rapport à l'indice de la gaine, est comprise entre $59.10^{-3}$ $\mu m^3$ et $123.10^{-3}$ $\mu m^3$.

8. Fibre optique à compensation de dispersion chromatique selon l'une quelconque des revendications 1-7. **caractérisée** en forme de rectangle ou en forme de trapèze
et en ce que le rayon ($r_{10}$) de la partie de la tranche centrale présentant l'indice maximum de la franche centrale est compris entre $1,31\mu m$ et $1,88\mu m$.

9. Fibre optique à compensation de dispersion selon l'une quelconque des revendications précédentes , **caractérisée en ce que** les rayons et les indices de chacune des tranches sont déterminés de manière à ce que la fibre optique à compensation de dispersion présente une longueur d'onde de coupure théorique supérieure à 1600nm.

10. Fibre optique à compensation de dispersion selon l'une quelconque des revendications 1 à 3, **caractérisée en ce que** le profil d'indice variable du coeur est successivement constitué, du centre vers la périphérie,
d'une tranche centrale d'indice maximum supérieur à l'indice de la gaine,
d'une tranche enterrée d'indice minimum inférieur à l'indice de la gaine,
d'une première tranche annulaire d'indice maximum supérieur à l'indice de la gaine et inférieur à l'indice maximum de la tranche centrale,
d'une deuxième tranche annulaire d'indice maximum supérieur à l'indice de la gaine et supérieur à l'indice de la première tranche annulaire.

11. Fibre optique à compensation de dispersion selon l'une quelconque des revendications 1 à 3, **caractérisée en ce que** le profil d'indice variable du coeur est successivement constitué, du centre vers la périphérie,

d'une tranche centrale d'indice maximum supérieur à l'indice de la gaine, d'une première tranche enterrée d'indice minimum inférieur à l'indice de la gaine, d'une franche annulaire d'indice maximum supérieur à l'indice de la gaine et inférieur à l'indice maximum de la tranche centrale,

d'une deuxième tronche enterrée d'indice minimum inférieur à l'indice de la gaine.

12. Fibre optique à compensation de dispersion selon l'une quelconque des revendications 10-11, **caractérisée en ce que** les rayons el les indices de chacune des tranches sont déterminés de manière à ce que la fibre optique à compensation de dispersion présente une longueur d'onde de coupure théorique supérieure à1550nm.

13. Fibre optique à compensation de dispersion selon l'une quelconque des revendications précédentes, **caractérisée en ce que** les rayons et les indices de chacune des tranches sont déterminés de manière à ce que la fibre optique à compensation de dispersion présente, à la longueur d'onde de 1550nm, une pente de dispersion chromatique dont la voleur absolue est inférieure à 0,02ps/nm$^2$km.

14. Fibre optique à compensation de dispersion selon l'une quelconque des revendications précédentes, **caractérisée en ce que** les rayons et les indices de chacune des tranches sont déterminés de manière à ce que la fibre optique à compensation de dispersion présente, à la longueur d'onde de 1550nm, une surface effective supérieure à 20$\mu$m$^2$.

15. Système de transmission à fibre optique comprenant l'association d'une fibre optique de ligne et d'une fibre optique à compensation de dispersion selon l'une quelconque des revendications précédentes, la fibre optique à compensation de dispersion étant en ligne.

**Claims**

1. Optical fibre with chromatic dispersion compensation over a plurality of spectral bands including at least band C,
for wavelength-division multiplex transmission networks,
including successively from the centre toward the periphery a core having a varying index profile and then a cladding of constant index,
the varying index profile of the core including successively, from the centre toward the periphery:

a central slice of rectangular or trapezium shape with a maximum index higher than the index of the cladding, the difference ($\Delta n_1$) between the maximum index of the central slice and the index of the cladding being between $14.0 \times 10^{-3}$ and $20.0 \times 10^{-3}$,
a buried slice having a minimum index lower than the index of the cladding,
an annular slice having a maximum index higher than the index of the cladding and lower than the maximum index of the central slice,

a value of twice the integral

$$\left( S_2 = 2. \int_{r_1}^{r_2} \Delta n(r) r.dr \right),$$ between the radius ($r_1$) of the part of the central portion having an index greater than the index of the cladding and the radius ($r_2$) of the part of the depressed portion having an index less than the index of the cladding, of the product of the radius and the difference in index with respect to the cladding, which is between $-150 \times 10^{-3}$ and $-10 \times 10^{-3}$, inclusive,
the difference ($\Delta n_2$) between the minimum index of the buried slice and the index of the cladding is between $-3.0 \times 10^{-3}$ and $0.0 \times 10^{-3}$,
and in that the outside radius ($r_2$) of the buried slice is between 5.8 $\mu$m and 8.5 $\mu$m, the difference ($\Delta n_3$) between the maximum index of the annular slice and the index of the cladding is between $1.0 \times 10^{-3}$ and $6.0 \times 10^{-3}$, and in that the outside radius ($r_3$) of the annular slice is between 7.2 $\mu$m and 9.7 $\mu$m, the radius ($r_1$) of the portion of the central slice of rectangular or trapezium shape having an index higher than the index of the cladding is between 1.4 $\mu$m and 1.9 $\mu$m,
on the one hand, at the wavelength of 1550 nm, firstly a chromatic dispersion between -40 ps/nm.km and -15 ps/nm.km,
secondly a chromatic dispersion slope that is negative,
thirdly a chromatic dispersion to dispersion slope ratio the absolute value of which is greater than 750 nm,
fourthly a mode diameter greater than 5 $\mu$m, and
on the other hand, at the wavelength of 1625 nm, bending losses for a radius of 10 mm that are less than 400 dB/m.

2. Optical fibre with chromatic dispersion compensation according to claim 1, **characterised in that** the radii and the indices of each of the slices are determined so that the optical fibre with dispersion compensation has, at the wavelength of 1550 nm, a chromatic dispersion to chromatic dispersion slope ratio the absolute value of which is greater than 1500 nm.

3. Optical fibre with dispersion compensation according to either of the preceding claims, **characterised in that** the optical fibre with chromatic dispersion compensation compensates the chromatic dispersion of a line optical fibre in the spectral bands S, C, L and U.

4. Optical fibre with chromatic dispersion compensation according to any of the preceding claims, **characterised in that** the value of twice the integral of the product of the radius by the index difference relative to the cladding $\left( S_1 = 2 . \int_0^{r_1} \Delta n(r) r . dr \right)$ between a zero radius and the radius ($r_1$) of the portion of the central slice having an index higher than the index of the cladding is between $39 \times 10^{-3}$ $\mu m^2$ and $65 \times 10^{-3}$ $\mu m^2$.

5. Optical fibre with chromatic dispersion compensation according to any of the preceding claims, **characterised in that** the value of twice the integral of the product of the radius by the index difference relative to the cladding $\left( S_2 = 2 . \int_{r_1}^{r_2} \Delta n(r) r . dr \right)$ between the radius ($r_1$) of the portion of the central slice having an index higher than the index of the cladding and the radius ($r_2$) of the portion of the buried slice having an index lower than the index of the cladding is between $-150 \times 10^{-3}$ $\mu m^2$ and $-10 \times 10^{-3}$ $\mu m^2$.

6. Optical fibre with chromatic dispersion compensation according to any of the preceding claims, **characterised in that** the value of twice the integral of the product of the radius by the index difference relative to the cladding $\left( S_3 = 2 . \int_{r_2}^{r_3} \Delta n(r) r . dr \right)$ between the radius ($r_2$) of the portion of the buried slice having an index lower than the index of the cladding and the radius ($r_3$) of the portion of the annular slice having an index higher than the index of the cladding is between $30 \times 10^{-3}$ $\mu m^2$ and $140 \times 10^{-3}$ $\mu m^2$.

7. Optical fibre with chromatic dispersion compensation according to any of the preceding claims, **char-**

**acterised in that** the value of three times the integral of the product of the square of the radius by the difference relative to the index of the cladding $\left( S_{11} = 3 . \int_0^{r_1} \Delta n(r) r^2 . dr \right)$ between a zero radius and the radius ($r_1$) of the portion of the central slice having an index higher than the index of the cladding is between $59 \times 10^{-3}$ $\mu m^2$ and $123 \times 10^{-3}$ $\mu m^2$.

8. Optical fibre with chromatic dispersion compensation according to any of claims 1 to 7, **characterised in that** the radius ($r_{1a}$) of the portion of the central slice having the maximum index of the central slice is between 1.31 $\mu m$ and 1.88 $\mu m$.

9. Optical fibre with dispersion compensation according to any of the preceding claims, **characterised in that** the radii and the indices of each of the slices are determined so that the optical fibre with dispersion compensation has a theoretical cut-off wavelength higher than 1600 nm.

10. Optical fibre with dispersion compensation according to any of claims 1 to 3, **characterised in that** the varying index profile of the core successively includes, from the centre toward the periphery:

a central slice with a maximum index higher than the index of the cladding,
a buried slice having a minimum index lower than the index of the cladding,
a first annular slice having a maximum index higher than the index of the cladding and lower than the maximum index of the central slice,
a second annular slice having a maximum index higher than the index of the cladding and higher than the index of the first annular slice.

11. Optical fibre with dispersion compensation according to any of claims 1 to 3, **characterised in that** the varying index profile of the core successively includes, from the centre toward the periphery:

a central slice with a maximum index higher than the index of the cladding,
a first buried slice having a minimum index lower than the index of the cladding,
an annular slice having a maximum index higher than the index of the cladding and lower than the maximum index of the central slice,
a second buried slice having a minimum index lower than the index of the cladding.

12. Optical fibre with dispersion compensation according to either of claims 10 or 11, **characterised in**

**that** the radii and the indices of each of the slices are determined so that the optical fibre with dispersion compensation has a theoretical cut-off wavelength greater than 1550 nm.

13. Optical fibre with dispersion compensation according to any of the preceding claims, **characterised in that** the radii and the indices of each of the slices are determined so that the optical fibre with dispersion compensation has, at the wavelength of 1550 nm, a chromatic dispersion slope the absolute value of which is less than 0.02 ps/nm$^2$.km.

14. Optical fibre with dispersion compensation according to any of the preceding claims, **characterised in that** the radii and the indices of each of the slices are determined so that the optical fibre with dispersion compensation has, at the wavelength of 1550 nm, an effective area greater than 20 $\mu$m$^2$.

15. Fibre optic transmission system comprising the association of a line optical fibre and an optical fibre with dispersion compensation according to any of the preceding claims, the optical fibre with dispersion compensation being in the line.

**Patentansprüche**

1. Lichtleitfaser mit Ausgleich der chromatischen Dispersion in mehreren Spektralbändern, darunter wenigstens das C-Band,
   für ein Übertragungsnetz mit Wellenlängenmultiplexierung,
   die nacheinander vom Zentrum zum Umfang mit einem Kern, der ein Profil mit variablem Index aufweist, und dann mit einer Hülle mit konstantem Index versehen ist,
   wobei das Profil mit variablem Index des Kerns nacheinander vom Zentrum zum Umfang enthält:

   einen zentralen Abschnitt in Rechteck- oder Trapezform mit maximalem Index größer als der Index der Hülle, wobei die Differenz ($\Delta n_1$) zwischen dem maximalen Index des zentralen Abschnitts und dem Index der Hülle im Bereich von $14{,}0 \cdot 10^{-3}$ bis $20{,}0 \cdot 10^{-3}$ liegt,
   einen vergrabenen Abschnitt mit minimalem Index kleiner als der Index der Hülle,
   einen ringförmigen Abschnitt mit maximalem Index größer als der Index der Hülle und kleiner als der maximale Index des zentralen Abschnitts,

   einen doppelten Wert des Integrals

$$S_2 = 2 \cdot \int_{r_1}^{r_2} \Delta n(r)\, r \cdot dr \;) \quad \text{von dem Radius}$$

($r_1$) des Teils des zentralen Abschnitts, welcher einen Index größer als der Index der Hülle aufweist, zu dem Radius ($r_2$) des Teils des vergrabenen Abschnitts, welcher einen Index kleiner als der Index der Hülle aufweist, des Produkts des Radius mit der Indexdifferenz zu der Hülle, welcher zwischen $-150.10^{-3}$ und $-10.10^{-3}$ enthalten ist, aufweist,
wobei die Differenz ($\Delta n_2$) zwischen dem minimalen Index des vergrabenen Abschnitts und dem Index der Hülle im Bereich von $-3{,}0 \cdot 10^{-3}$ bis $0{,}0 \cdot 10^{-3}$ liegt,
der äußere Radius ($r_2$) des vergrabenen Abschnitts im Bereich von 5,8 $\mu$m bis 8,5 $\mu$m liegt,
die Differenz ($\Delta n_3$) zwischen dem maximalen Index des ringförmigen Abschnitts und dem Index der Hülle im Bereich von $1{,}0 \cdot 10^{-3}$ bis $6{,}0 \cdot 10^{-3}$ liegt,
der äußere Radius ($r_3$) des ringförmigen Abschnitts im Bereich von 7,2 $\mu$m bis 9,7 $\mu$m liegt, und
der Radius ($r_1$) des Teils des zentralen Abschnitts mit Rechteck- oder Trapezform, der einen Index größer als der Index der Hülle aufweist, im Bereich von 1,4 $\mu$m bis 1,9 $\mu$m liegt,
einerseits bei der Wellenlänge von 1550 nm
erstens eine chromatische Dispersion, die im Bereich von -40 ps/nm $\cdot$ km bis - 15 ps/nm $\cdot$ km liegt,
zweitens eine negative Steigung der chromatischen Dispersion,
drittens ein Verhältnis der chromatischen Dispersion zur Steigung der chromatischen Dispersion, dessen Absolutwert größer als 750 nm ist,
viertens einen Modendurchmesser größer als 5 $\mu$m,
und andererseits bei der Wellenlänge von 1625 nm Verluste pro Krümmung mit einem Radius von 10 mm, die kleiner sind als 400 dB/m.

2. Lichtleitfaser mit Ausgleich der chromatischen Dispersion nach Anspruch 1, **dadurch gekennzeichnet, dass** die Radien und die Indizes jedes der Abschnitte in der Weise bestimmt sind, dass die Lichtleitfaser mit Dispersionsausgleich bei der Wellenlänge von 1550 nm ein Verhältnis der chromatischen Dispersion zur Steigung der chromatischen Dispersion aufweist, dessen Absolutwert größer ist als 1500 nm.

3. Lichtleitfaser mit Ausgleich der chromatischen Dispersion nach einem der vorhergehenden Ansprüche, **dadurch gekennzeichnet, dass** die Lichtleitfaser mit Ausgleich der chromatischen Dispersion die chromatische Dispersion einer Leitungslichtleitfaser in S-, C-, L- und U-Spektralbändern ausgleicht.

4. Lichtleitfaser mit Ausgleich der chromatischen Dispersion nach einem der vorhergehenden Ansprüche, **dadurch gekennzeichnet, dass** der Wert des zweifachen Integrals $\left( S_1 = 2 \cdot \int_0^{r_1} \Delta n(r)\, r \cdot dr \right)$

des Produkts aus dem Radius und der Indexdifferenz in Bezug auf die Hülle zwischen einem Radius null und dem Radius ($r_1$) des Teils des zentralen Abschnitts, der einen Index größer als der Index der Hülle aufweist, im Bereich von $39 \cdot 10^{-3}$ bis $65 \cdot 10^{-3}$ $\mu m^2$ liegt.

5. Lichtleitfaser mit Ausgleich der chromatischen Dispersion nach einem der vorhergehenden Ansprüche, **dadurch gekennzeichnet, dass** der Wert des zweifachen Integrals $\left( S_2 = 2 \cdot \int_{r_1}^{r_2} \Delta n(r)\, r \cdot dr \right)$

des Produkts des Radius und der Indexdifferenz in Bezug auf die Hülle zwischen dem Radius ($r_1$) des Teils des zentralen Abschnitts, der einen Index größer als der Index der Hülle aufweist, und dem Radius ($r_2$) des Teils des vergrabenen Abschnitts, der einen Index kleiner als der Index der Hülle aufweist, im Bereich von $-150 \cdot 10^{-3}$ bis $-10 \cdot 10^{-3}$ $\mu m^2$ liegt.

6. Lichtleitfaser mit Ausgleich der chromatischen Dispersion nach einem der vorhergehenden Ansprüche, **dadurch gekennzeichnet, dass** der Wert des zweifachen Integrals $\left( S_3 = 2 \cdot \int_{r_2}^{r_3} \Delta n(r)\, r \cdot dr \right)$

des Produkts des Radius und der Indexdifferenz in Bezug auf die Hülle zwischen dem Radius ($r_2$) des Teils des vergrabenen Abschnitts, der einen Index kleiner als der Index der Hülle aufweist, und dem Radius ($r_3$) des Teils des ringförmigen Abschnitts, der einen Index größer als der Index der Hülle aufweist, im Bereich von $30 \cdot 10^{-3}$ bis $140 \cdot 10^{-3}$ $\mu m^2$ liegt.

7. Lichtleitfaser mit Ausgleich der chromatischen Dispersion nach einem der vorhergehenden Ansprüche, **dadurch gekennzeichnet, dass** der Wert des dreifachen Integrals $\left( S_{11} = 3 \cdot \int_0^{r_1} \Delta n(r)\, r^2 \cdot dr \right)$ des Produkts des Quadrats des Radius und der Indexdifferenz in Bezug auf den Index der Hülle zwischen einem Radius von null und dem Radius ($r_1$) des Teils des zentralen Abschnitts, der einen Index größer als der Index der Hülle aufweist, im Bereich von $59 \cdot 10^{-3}$ $\mu m^3$ bis $123 \cdot 10^{-3}$ $\mu m^3$ liegt.

8. Lichtleiterfaser mit Ausgleich der chromatischen Dispersion nach einem der Ansprüche 1-7, **dadurch gekennzeichnet, dass** der Radius ($r_{1a}$) des Teils des zentralen Abschnitts, der einen maximalen Index des zentralen Abschnitts aufweist, im Bereich von $1{,}31$ $\mu m$ bis $1{,}88$ $\mu m$ liegt.

9. Lichtleitfaser mit Dispersionsausgleich nach einem der vorhergehenden Ansprüche, **dadurch gekennzeichnet, dass** die Radien und die Indizes jedes der Abschnitte in der Weise bestimmt sind, dass die Lichtleitfaser mit Dispersionsausgleich eine theoretische Kappungswellenlänge größer als 1600 nm aufweist.

10. Lichtleitfaser mit Dispersionsausgleich nach einem der Ansprüche 1 bis 3, **dadurch gekennzeichnet, dass** das Profil mit variablem Index des Kerns nacheinander vom Zentrum zum Umfang gebildet ist aus einem zentralen Abschnitt mit maximalem Index größer als der Index der Hülle, einem vergrabenen Abschnitt mit minimalem Index kleiner als der Index der Hülle, einem ersten ringförmigen Abschnitt mit maximalem Index größer als der Index der Hülle und kleiner als der maximale Index des zentralen Abschnitts, einem zweiten ringförmigen Abschnitt mit maximalem Index größer als der Index der Hülle und größer als der Index des ersten ringförmigen Abschnitts.

11. Lichtleitfaser mit Dispersionsausgleich nach einem der Ansprüche 1 bis 3, **dadurch gekennzeichnet, dass** das Profil mit variablem Index des Kerns nacheinander vom Zentrum zum Umfang gebildet ist aus einem zentralen Abschnitt mit maximalem Index größer als der Index der Hülle, einem ersten vergrabenen Abschnitt mit minimalem Index kleiner als der Index der Hülle, einem ringförmigen Abschnitt mit maximalem Index größer als der Index der Hülle und kleiner als der maximale Index des zentralen Abschnitts, einem zweiten vergrabenen Abschnitt mit minimalem Index kleiner als der Index der Hülle.

12. Lichtleitfaser mit Dispersionsausgleich nach einem der Ansprüche 10-11, **dadurch gekennzeichnet, dass** die Radien und die Indizes jedes der Abschnitte in der Weise bestimmt sind, dass die Lichtleitfaser mit Dispersionsausgleich eine theoretische Kappungswellenlänge größer als 1550 nm aufweist.

**13.** Lichtleitfaser mit Dispersionsausgleich nach einem der vorhergehenden Ansprüche, **dadurch gekennzeichnet, dass** die Radien und die Indizes jedes der Abschnitte in der Weise bestimmt sind, dass die Lichtleitfaser mit Dispersionsausgleich bei der Wellenlänge von 1550 nm eine Steigung der chromatischen Dispersion aufweist, deren Absolutwert kleiner ist als 0,02 ps/nm$^2$ · km.

**14.** Lichtleitfaser mit Dispersionsausgleich nach einem der vorhergehenden Ansprüche, **dadurch gekennzeichnet, dass** die Radien und die Indizes jedes der Abschnitte in der Weise bestimmt sind, dass die Lichtleitfasern mit Dispersionsausgleich bei der Wellenlänge von 1550 nm eine effektive Oberfläche größer als 20 $\mu$m$^3$ aufweist.

**15.** Lichtleitfaser-Übertragungssystem, das den Verbund aus einer Leitungslichtleitfaser und einer Lichtleitfaser mit Dispersionsausgleich nach einem der vorhergehenden Ansprüche umfasst, wobei die Lichtleitfaser mit Dispersionsausgleich als Leitung ausgebildet ist.

Figure 1

| | $r_1$ (μm) | $r_2$ (μm) | $r_3$ (μm) | $\Delta n_1$ (×10³) | $\Delta n_2$ (×10³) | $\Delta n_3$ (×10³) |
|---|---|---|---|---|---|---|
| 1a* | 1,70 | 5,80 | 7,20 | 17,9 | -3,0 | 3,1 |
| 2a | 1,85 | 5,80 | 7,20 | 14,5 | -1,6 | 5,0 |
| 3a* | 1,80 | 7,65 | 9,10 | 16,0 | -2,0 | 5,0 |
| 4a | 1,55 | 8,50 | 9,35 | 18,8 | -1,7 | 2,1 |
| 5a | 1,35 | 5,40 | 7,90 | 21,0 | -0,4 | 3,8 |
| 6a | 1,35 | 5,45 | 7,95 | 20,9 | -0,4 | 2,5 |
| 7a | 1,45 | 3,95 | 7,00 | 22,0 | -5,0 | 3,8 |
| 8a | 1,20 | 6,45 | 8,40 | 24,8 | -0,4 | 3,9 |
| 9a | 1,30 | 5,25 | 7,20 | 23,0 | -1,7 | 4,9 |
| 10a | 1,35 | 4,25 | 7,90 | 21,0 | -0,4 | 1,0 |

Figure 2

* selon l'invention

| | C' [ps/(nm².km)] @1550 nm | C/C' [nm] @1550 nm | $2W_{02}$ [μm] @1550 nm | $\lambda_{cth}$ (nm) |
|---|---|---|---|---|
| 1a* | -0,0293 | 922 | 5,17 | 1254 |
| 2a | 0,0054 | -4609 | 6,14 | 1578 |
| 3a* | -0,0109 | 1804 | 5,54 | 1762 |
| 4a | 0,0219 | -1254 | 5,26 | 866 |
| 5a | 0,0610 | -967 | 5,89 | 1741 |
| 6a | 0,0413 | -1237 | 5,72 | 1598 |
| 7a | -0,0259 | 3824 | 5,28 | 1608 |
| 8a | 0,0006 | -109907 | 5,26 | 1728 |
| 9a | -0,0150 | 5274 | 5,39 | 1645 |
| 10a | 0,0566 | -811 | 5,64 | 1388 |

Figure 3

| | $S_{eff}$ [$\mu m^2$] @1460 nm | $S_{eff}$ [$\mu m^2$] @1550 nm | $S_{eff}$ [$\mu m^2$] @1625 nm | $S_{eff}$ [$\mu m^2$] @1675 nm |
|---|---|---|---|---|
| 1a* | 17 | 20 | 23 | 26 |
| 2a | 24 | 29 | 34 | 39 |
| 3a* | 20 | 23 | 26 | 29 |
| 4a | 18 | 21 | 24 | 26 |
| 5a | 20 | 27 | 36 | 44 |
| 6a | 19 | 25 | 32 | 38 |
| 7a | 16 | 23 | 33 | 44 |
| 8a | 16 | 21 | 27 | 33 |
| 9a | 17 | 23 | 31 | 40 |
| 10a | 19 | 24 | 30 | 35 |

Figure 4

| | C [ps/(nm,km)] @1460 nm | C [ps/(nm,km)] @1550 nm | C [ps/(nm,km)] @1625 nm | C [ps/(nm,km)] @1675 nm |
|---|---|---|---|---|
| 1a* | -25 | -27 | -30 | -32 |
| 2a | -25 | -25 | -24 | -22 |
| 3a* | -20 | -20 | -21 | -23 |
| 4a | -30 | -27 | -26 | -26 |
| 5a | -61 | -59 | -52 | -43 |
| 6a | -53 | -51 | -47 | -42 |
| 7a | -88 | -99 | -92 | -78 |
| 8a | -65 | -66 | -65 | -61 |
| 9a | -74 | -79 | -76 | -68 |
| 10a | -50 | -46 | -41 | -36 |

Figure 5

\* selon l'invention

| | PC10mm [dB/m] @1550 nm | PC10mm [dB/m] @1625 nm | PC10mm [dB/m] @1675 nm | PC30mm [dB/m] @1550 nm | PC30mm [dB/m] @1625 nm | PC30mm [dB/m] @1675 nm |
|---|---|---|---|---|---|---|
| 1a* | < 3 | < 5 | < 25 | $< 10^{-9}$ | $< 10^{-8}$ | $< 10^{-5}$ |
| 2a | < 3 | < 10 | < 50 | $< 10^{-8}$ | $< 10^{-6}$ | $< 10^{-4}$ |
| 3a* | < 3 | < 5 | < 50 | $< 10^{-9}$ | $< 10^{-7}$ | $< 10^{-4}$ |
| 4a | < 3 | < 5 | < 25 | $< 10^{-9}$ | $< 10^{-6}$ | $< 10^{-4}$ |
| 5a | < 3 | < 10 | < 25 | $< 10^{-7}$ | $< 10^{-7}$ | $< 10^{-5}$ |
| 6a | < 3 | < 5 | < 50 | $< 10^{-9}$ | $< 10^{-7}$ | $< 10^{-3}$ |
| 7a | < 3 | < 40 | < 150 | $< 10^{-9}$ | $< 10^{-5}$ | $< 10^{-3}$ |
| 8a | < 3 | < 5 | < 50 | $< 10^{-9}$ | $< 10^{-7}$ | $< 10^{-5}$ |
| 9a | < 3 | < 20 | < 100 | $< 10^{-7}$ | $< 10^{-5}$ | $< 10^{-3}$ |
| 10a | < 3 | < 5 | < 25 | $< 10^{-9}$ | $< 10^{-7}$ | $< 10^{-5}$ |

Figure 6

Figure 7

| | $r_{1a}$ (µm) | $r_1$ (µm) | $r_{1b}$ (µm) | $r_2$ (µm) | $r_3$ (µm) | $\Delta n_1$ (×10³) | $\Delta n_2$ (×10³) | $\Delta n_3$ (×10³) |
|---|---|---|---|---|---|---|---|---|
| 1b | 1,40 | 1,85 | 1,90 | 8,50 | 9,15 | 17,9 | -1,0 | 6,0 |
| 2b | 1,35 | 1,85 | 1,90 | 7,15 | 9,20 | 16,9 | -1,0 | 1,7 |
| 3b* | 1,40 | 1,85 | 1,90 | 6,95 | 7,90 | 17,5 | -1,3 | 6,0 |
| 4b | 1,35 | 1,50 | 1,50 | 5,85 | 8,00 | 20,4 | -1,2 | 1,0 |
| 5b | 1,20 | 1,40 | 1,45 | 5,60 | 6,90 | 22,2 | -0,6 | 7,0 |
| 6b | 1,20 | 1,30 | 1,35 | 6,50 | 7,90 | 23,4 | -0,7 | 6,5 |
| 7b | 1,15 | 1,65 | 1,70 | 5,95 | 7,10 | 21,0 | -0,9 | 8,0 |
| 8b | 1,20 | 1,30 | 1,35 | 5,90 | 7,05 | 24,0 | -0,9 | 8,0 |
| 9b | 1,15 | 1,65 | 1,70 | 6,20 | 7,35 | 21,2 | -0,7 | 7,3 |
| 10b | 1,20 | 1,60 | 1,70 | 3,70 | 7,75 | 22,3 | -4,9 | 2,2 |

Figure 8

\* selon l'invention

| | C' [ps/(nm².km)] @1550 nm | C/C' [nm] @1550 nm | $2W_{o2}$ [µm] @1550 nm | $\lambda_{cth}$ (nm) |
|---|---|---|---|---|
| 1b | 0,0232 | -924 | 5,50 | 1565 |
| 2b | 0,0167 | -1455 | 5,75 | 1478 |
| 3b* | -0,0029 | 9650 | 5,61 | 1631 |
| 4b | 0,0097 | -4109 | 5,30 | 1119 |
| 5b | 0,0805 | -807 | 5,80 | 1650 |
| 6b | -0,0200 | 3389 | 5,41 | 1735 |
| 7b | -0,0049 | 10086 | 5,46 | 1711 |
| 8b | 0,0054 | -13322 | 5,36 | 1683 |
| 9b | -0,0052 | 8872 | 5,40 | 1727 |
| 10b | -0,0863 | 972 | 5,12 | 1599 |

Figure 9

| | $S_{eff}$ [μm²] @1460 nm | $S_{eff}$ [μm²] @1550 nm | $S_{eff}$ [μm²] @1625 nm | $S_{eff}$ [μm²] @1675 nm |
|---|---|---|---|---|
| 1b | 19 | 22 | 26 | 29 |
| 2b | 21 | 25 | 29 | 32 |
| 3b* | 20 | 23 | 28 | 31 |
| 4b | 17 | 21 | 25 | 29 |
| 5b | 20 | 27 | 36 | 44 |
| 6b | 17 | 23 | 30 | 37 |
| 7b | 18 | 23 | 28 | 33 |
| 8b | 17 | 22 | 30 | 36 |
| 9b | 18 | 22 | 27 | 32 |
| 10b | 16 | 21 | 28 | 35 |

Figure 10

| | C [ps/(nm,km)] @1460 nm | C [ps/(nm,km)] @1550 nm | C [ps/(nm,km)] @1625 nm | C [ps/(nm,km)] @1675 nm |
|---|---|---|---|---|
| 1b | -24 | -21 | -20 | -19 |
| 2b | -26 | -24 | -23 | -22 |
| 3b* | -28 | -28 | -28 | -28 |
| 4b | -41 | -40 | -39 | -38 |
| 5b | -68 | -65 | -56 | -46 |
| 6b | -65 | -68 | -67 | -62 |
| 7b | -48 | -49 | -48 | -45 |
| 8b | -70 | -72 | -68 | -62 |
| 9b | -45 | -46 | -46 | -44 |
| 10b | -73 | -84 | -86 | -80 |

Figure 11

✳ selon l'invention

| | PC10mm [dB/m] @1550 nm | PC10mm [dB/m] @1625 nm | PC10mm [dB/m] @1675 nm | PC30mm [dB/m] @1550 nm | PC30mm [dB/m] @1625 nm | PC30mm [dB/m] @1675 nm |
|---|---|---|---|---|---|---|
| 1b | < 3 | < 10 | < 50 | $< 10^{-9}$ | $< 10^{-7}$ | $< 10^{-5}$ |
| 2b | < 3 | < 20 | < 100 | $< 10^{-9}$ | $< 10^{-5}$ | $< 10^{-3}$ |
| 3b* | < 3 | < 5 | < 25 | $< 10^{-9}$ | $< 10^{-8}$ | $< 10^{-5}$ |
| 4b | < 3 | < 5 | < 25 | $< 10^{-9}$ | $< 10^{-7}$ | $< 10^{-4}$ |
| 5b | < 3 | < 5 | < 25 | $< 10^{-9}$ | $< 10^{-8}$ | $< 10^{-5}$ |
| 6b | < 3 | < 10 | < 50 | $< 10^{-9}$ | $< 10^{-7}$ | $< 10^{-4}$ |
| 7b | < 3 | < 5 | < 10 | $< 10^{-9}$ | $< 10^{-9}$ | $< 10^{-6}$ |
| 8b | < 3 | < 5 | < 25 | $< 10^{-9}$ | $< 10^{-11}$ | $< 10^{-5}$ |
| 9b | < 3 | < 5 | < 10 | $< 10^{-7}$ | $< 10^{-7}$ | $< 10^{-8}$ |
| 10b | < 3 | < 25 | < 125 | $< 10^{-7}$ | $< 10^{-5}$ | $< 10^{-3}$ |

Figure 12

Figure 13

| | $r_1$ (μm) | $r_2$ (μm) | $r_3$ (μm) | $r_4$ (μm) | $\Delta n_1$ (×10³) | $\Delta n_2$ (×10³) | $\Delta n_3$ (×10³) | $\Delta n_4$ (×10³) |
|---|---|---|---|---|---|---|---|---|
| 1c | 2,65 | 6,00 | 9,75 | 12,00 | 10,8 | -3,7 | 5,0 | -6,0 |
| 2c | 1,60 | 3,55 | 4,10 | 7,00 | 19,8 | -6,0 | -0,1 | 3,7 |
| 3c | 1,80 | 4,10 | 6,90 | 7,85 | 17,9 | -1,4 | 2,9 | 0,8 |
| 4c | 1,85 | 5,00 | 7,90 | 8,35 | 15,1 | -1,8 | 3,0 | 5,0 |
| 5c* | 1,75 | 4,80 | 5,80 | 8,30 | 17,0 | -1,6 | 0,5 | 2,0 |
| 6c | 1,55 | 4,15 | 7,50 | 9,60 | 21,0 | -6,0 | 4,7 | -2,1 |
| 7c* | 2,05 | 4,30 | 8,90 | 10,20 | 14,4 | -5,0 | 3,5 | -4,2 |
| 8c | 1,60 | 3,70 | 4,15 | 7,05 | 19,2 | -3,8 | 2,9 | 3,8 |
| 9c | 1,70 | 4,05 | 8,05 | 9,60 | 18,1 | -6,0 | 4,0 | -3,5 |
| 10c | 1,70 | 4,50 | 10,00 | 11,25 | 17,0 | -2,3 | 2,8 | -4,0 |

Figure 14

* .selon l'invention

| | C' [ps/(nm².km)] @1550 nm | C/C' [nm] @1550 nm | $2W_{02}$ [μm] @1550 nm | $\lambda_{cib}$ (nm) |
|---|---|---|---|---|
| 1c | -0,0065 | 1522 | 6,71 | 1760 |
| 2c | -0,0065 | 12758 | 5,46 | 1607 |
| 3c | 0,0217 | -1167 | 5,60 | 1645 |
| 4c | 0,0007 | -49802 | 6,19 | 1761 |
| 5c* | -0,0032 | 8366 | 5,59 | 1611 |
| 6c | -0,0858 | 1157 | 5,20 | 1606 |
| 7c* | -0,0003 | 132667 | 6,13 | 1680 |
| 8c | 0,0579 | -1022 | 5,71 | 1665 |
| 9c | -0,0060 | 12589 | 5,60 | 1619 |
| 10c | -0,0076 | 6607 | 5,94 | 1760 |

Figure 15

|  | $S_{eff}$ [$\mu m^2$] @1460 nm | $S_{eff}$ [$\mu m^2$] @1550 nm | $S_{eff}$ [$\mu m^2$] @1625 nm | $S_{eff}$ [$\mu m^2$] @1675 nm |
|---|---|---|---|---|
| 1c | 30 | 36 | 43 | 48 |
| 2c | 18 | 25 | 34 | 44 |
| 3c | 20 | 24 | 28 | 31 |
| 4c | 24 | 30 | 37 | 44 |
| 5c | 20 | 23 | 27 | 31 |
| 6c | 16 | 23 | 33 | 44 |
| 7c | 24 | 30 | 39 | 47 |
| 8c | 20 | 26 | 34 | 41 |
| 9c | 19 | 26 | 37 | 47 |
| 10c | 21 | 28 | 36 | 44 |

Figure 16

|  | C [ps/(nm,km)] @1460 nm | C [ps/(nm,km)] @1550 nm | C [ps/(nm,km)] @1625 nm | C [ps/(nm,km)] @1675 nm |
|---|---|---|---|---|
| 1c | -9 | -10 | -10 | -8 |
| 2c | -75 | -83 | -77 | -66 |
| 3c | -27 | -25 | -23 | -21 |
| 4c | -33 | -35 | -33 | -30 |
| 5c | -27 | -27 | -27 | -26 |
| 6c | -82 | -99 | -95 | -81 |
| 7c | -37 | -40 | -37 | -32 |
| 8c | -60 | -59 | -52 | -43 |
| 9c | -67 | -76 | -69 | -58 |
| 10c | -47 | -50 | -48 | -42 |

Figure 17

✳ selon l'invention

|  | PC10mm [dB/m] @1550 nm | PC10mm [dB/m] @1625 nm | PC10mm [dB/m] @1675 nm | PC30mm [dB/m] @1550 nm | PC30mm [dB/m] @1625 nm | PC30mm [dB/m] @1675 nm |
|---|---|---|---|---|---|---|
| 1c | < 3 | < 5 | < 10 | < $10^{-9}$ | < $10^{-8}$ | < $10^{-6}$ |
| 2c | < 3 | < 25 | < 100 | < $10^{-9}$ | < $10^{-5}$ | < $10^{-3}$ |
| 3c | < 3 | < 5 | < 10 | < $10^{-9}$ | < $10^{-9}$ | < $10^{-7}$ |
| 4c | < 3 | < 10 | < 50 | < $10^{-9}$ | < $10^{-7}$ | < $10^{-5}$ |
| 5c | < 3 | < 5 | < 10 | < $10^{-9}$ | < $10^{-9}$ | < $10^{-6}$ |
| 6c | < 3 | < 25 | < 150 | < $10^{-9}$ | < $10^{-5}$ | < $10^{-3}$ |
| 7c | < 3 | < 10 | < 50 | < $10^{-9}$ | < $10^{-7}$ | < $10^{-5}$ |
| 8c | < 3 | < 5 | < 10 | < $10^{-9}$ | < $10^{-9}$ | < $10^{-8}$ |
| 9c | < 3 | < 20 | < 100 | < $10^{-9}$ | < $10^{-6}$ | < $10^{-4}$ |
| 10c | < 3 | < 10 | < 150 | < $10^{-7}$ | < $10^{-7}$ | < $10^{-5}$ |

Figure 18

## Figure 19

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0101179 A

- WO 9942869 A